# EUROPÄISCHE PATENTANMELDUNG

(11) **EP 2 604 908 A1**
(43) Veröffentlichungstag der Anmeldung: **19.06.2013**
(21) Anmeldenummer: 12196473.8
(22) Anmeldetag: 11.12.2012
(51) Int. Cl.: F16N 7/38

(54) **Schmiermittelsystem und Windkraftanlage**

(30) Priorität: 12.12.2011 DE 102011088228
(71) Anmelder: Aktiebolaget SKF, 41550 Göteborg (SE)
(72) Erfinder: Schürmann, Stefan, 69190 Walldorf (DE); Kreutzkämper, Jürgen, 10405 Berlin (DE); Sattelberger, Paul, 68799 Reilingen (DE)
(74) Vertreter: Schonecke, Mitja

(57) **Zusammenfassung**

Ein Schmiermittelsystem (100) gemäß einem Ausführungsbeispiel umfasst eine erste Schmiermittelpumpe (110), die über einen ersten Schmiermittelpfad (130) mit einer ersten Verbrauchsstelle (120) gekoppelt ist, und eine zweite Schmiermittelpumpe (190), die über einen zweiten Schmiermittelpfad (310) mit einer zweiten Verbrauchsstelle (290) gekoppelt ist, wobei die zweite Verbrauchsstelle (290) von der ersten Verbrauchsstelle (120) verschieden ist, wobei der erste (130) und der zweite Schmiermittelpfad (310) voneinander getrennt sind, und wobei die zweite Schmiermittelpumpe (190) von der ersten Schmiermittelpumpe (110) durch eine von dieser geförderten Schmiermittelmenge angesteuert wird. Hierdurch kann gegebenenfalls eine flexiblere und/oder effizientere Versorgung mit einem oder mehreren Schmiermitteln ermöglicht werden.

## Beschreibung

Ausführungsbeispiele beziehen sich auf ein Schmiermittelsystem und eine Windkraftanlage.

Bei vielen Komponenten, Maschinen und größeren Anlagen des Maschinen- und Anlagenbaus tritt das Problem der Reibung zwischen sich relativ zueinander bewegenden Teilen der betreffenden Anlagen auf. Diesem treten ihre Konstrukteure typischerweise dadurch entgegen, dass sie eine entsprechende Schmierung oder ein entsprechendes Schmiersystem vorsehen.

Im Bereich der Schmiertechnik werden unterschiedliche Ansätze verwendet. So kann es beispielsweise bei einzelnen Komponenten möglich sein, diese mit einer auf ihre projizierte Lebensdauer abgestimmte Schmierung, also eine Lebensdauerschmierung (engl.: For-Life-Schmierung) zu versehen. So kann die betreffende Komponente beispielsweise mit einem Schmiermittelspeicher ausgerüstet werden, der zusammen mit der entsprechenden Komponente verbaut und im Wartungsfall mit dieser auch zusammen getauscht wird.

Eine solche Lebensdauerschmiertechnik kann jedoch nicht bei allen Komponenten eingesetzt werden. So kann es beispielsweise problematisch sein, im Falle höher belasteter Komponenten eine ausreichende Schmiermittelversorgung mit einer Lebensdauerschmierung zu gewährleisten. Auch kann im Falle sehr langer Betriebsdauem eine Alterung des Schmiermittels einsetzen, weshalb ein periodischer oder zyklischer Austausch des Schmiermittels notwendig oder ratsam sein kann, die betreffende Komponente jedoch noch nicht getauscht werden muss.

Aus diesem, aber auch aus anderen Gründen, kommen daher bei Maschinen und Anlagen auch komplexere Schmiermittelsysteme zum Einsatz, bei denen beispielsweise aus einem Schmiermittelreservoire mit Hilfe einer Schmiermittelpumpe das Schmiermittel an die betreffende Verbrauchs- oder Schmierstelle transportiert wird.

Gerade bei größeren Anlagen und Maschinen treten hierbei jedoch Komplikationen auf, die sich aus der Größe und/oder der Komplexität der betreffenden Maschine oder Anlage ergeben können. So kann es beispielsweise bei einer solchen Anlage oder Maschine notwendig oder ratsam sein, unterschiedliche Schmiermittel für unterschiedliche Komponenten einzusetzen. Ebenso kann es möglich sein, eines oder mehrere Schmiermittel bei stark unterschiedlichen Schmiermitteleigenschaften, also beispielsweise unterschiedlicher Temperaturen, einzusetzen. Ebenso kann es aufgrund konstruktiver Randbedingungen gegebenenfalls notwendig oder ratsam sein, das gleiche, gegebenenfalls auch unterschiedliche Schmiermittel an unterschiedlichen Komponenten mit deutlich unterschiedlichen Druckwerten und/oder deutlich unterschiedlichen Mengen bereitzustellen.

Konventionell werden für solche Randbedingungen unterschiedliche, separate Schmiermittelsysteme eingesetzt, die jeweils auf die betreffenden Schmierbedingungen der Einzelkomponente abgestimmt sind. Hierdurch entstehen nicht nur deutlich höhere Kosten, durch die Implementierung unterschiedlicher Schmiermittelsystem wird auch gegebenenfalls wertvoller Bauraum eingesetzt und die Masse der betreffenden Anlage oder Maschine erhöht.

Es besteht daher ein Bedarf, ein Schmiermittelsystem zu schaffen, welches eine flexiblere und/oder effizientere und einfachere Versorgung mit einem oder mehreren Schmierstoffen ermöglicht.

Diesem Bedarf tragen ein Schmiermittelsystem gemäß Patentanspruch 1 und eine Windkraftanlage gemäß Patentanspruch 9 Rechnung.

Ein Schmiermittelsystem gemäß einem Ausführungsbeispiel umfasst eine erste Schmiermittelpumpe, die über einen ersten Schmiermittelpfad mit einer ersten Verbrauchsstelle gekoppelt ist, und eine zweite Schmiermittelpumpe, die über einen zweiten Schmiermittelpfad mit einer zweiten Verbrauchsstelle gekoppelt ist, wobei die zweite Verbrauchsstelle von der ersten Verbrauchsstelle verschieden ist, wobei der erste und der zweite Schmiermittelpfad voneinander getrennt sind, und wobei die zweite Schmiermittelpumpe von der ersten Schmiermittelpumpe durch eine von dieser geförderten Schmiermittelmenge angesteuert wird.

Eine Windkraftanlage gemäß einem Ausführungsbeispiel umfasst ein Schmiermittelsystem gemäß einem Ausführungsbeispiel.

Einem Schmiermittelsystem gemäß einem Ausführungsbeispiel liegt so die Erkenntnis zugrunde, dass eine flexiblere und/oder effizientere und einfachere Versorgung mit einem oder mehreren Schmierstoffen dadurch erzielbar ist, dass zwar eine zweite Schmiermittelpumpe vorgesehen ist, die über den zweiten Schmiermittelpfad mit der zweiten Verbrauchsstelle gekoppelt ist, diese jedoch durch die von der ersten Schmiermittelpumpe geförderten Schmiermittelmenge angesteuert wird. Hierdurch kann eine Implementierung eines elektrischen, hydraulischen, pneumatischen oder anders gearteten separaten Aktuators im Rahmen der zweiten Schmiermittelpumpe, sowie gegebenenfalls eine entsprechende getrennte Leistungsversorgung und Ansteuerung der zweiten Schmiermittelpumpe eingespart werden. Unabhängig hiervon kann jedoch aufgrund der Implementierung der zweiten Schmiermittelpumpe die Versorgung mit dem oder den Schmierstoffen flexibler gestaltet werden.

Ein Schmiermittelpfad stellt hierbei eine fluidtechnische Verbindung eines Ausgangs einer Schmiermittelpumpe mit einem Zufluss einer entsprechenden Verbrauchsstelle dar. Bei einem Ausführungsbeispiel eines Schmiermittelsystems sind so der erste und der zweite Schmiermittelpfad voneinander getrennt, sodass diese zumindest zwischen der ersten bzw. zweiten Schmiermittelpumpe bis hin zu der ersten bzw. zweiten Verbrauchsstelle voneinander getrennt sind. Die beiden Schmiermittelpfade sind also derart getrennt, dass keine unmittelbare fluidtechnische Verbindung zwischen diesen besteht. Eine mittelbare fluidtechnische Verbindung kann sich gegebenenfalls jedoch über einen gemeinsamen Entsorgungsbehälter oder ein gemeinsames Schmiermittelreservoir ergeben. Anders ausgedrückt können bei einem Schmiermittelsystem gemäß einem Ausführungsbeispiel die Schmiermittelpfade unmittelbar vollständig fluidtechnisch voneinander getrennt sein.

Bei einem Schmiermittelsystem gemäß einem Ausführungsbeispiel kann die erste Schmiermittelpumpe eine Ausgangsleistung aufweisen, die wenigstens ein 1,25-Faches einer Ausgangsleistung der zweiten Schmiermittelpumpe beträgt. Hierdurch kann es möglich sein, dass die zweite Schmiermittelpumpe von der ersten Schmiermittelpumpe mit einer so großen Energiemenge versorgt wird, dass die zweite Schmiermittelpumpe eine zumindest eine nicht unerhebliche Schmiermittelmenge bei einem entsprechenden Druck der zweiten Verbrauchsstelle bereitstellen kann. So kann bei einem Schmiermittelsystem gemäß einem Ausführungsbeispiel die zweite Schmiermittelpumpe eine zu einer Förderung einer zweiten Schmiermittelmenge notwendigen Energie ausschließlich von der ersten Schmiermittelpumpe in Form der von dieser geförderten Schmiermittelmenge erhalten.

Im Unterschied hierzu kann bei einem Schmiermittelsystem gemäß einem Ausführungsbeispiel die erste Schmiermittelpumpe eine elektrisch angesteuerte Schmiermittelpumpe umfassen. Hierdurch kann eine einfache und leicht steuerbare Energieeinleitung in das Schmiermittelsystem erfolgen. Im Unterschied hierzu erhält die zweite Schmiermittelpumpe die zur Förderung der zweiten Schmiermittelmenge notwendige Energie durch die von der ersten Schmiermittelpumpe geförderte und der zweiten Schmiermittelpumpe bereitgestellte Schmiermittelmenge.

Bei einem Schmiermittelsystem gemäß einem Ausführungsbeispiel kann die erste und/oder die zweite Schmiermittelpumpe ein Schmiermittelreservoir oder einen Schmiermittelbehälter umfassen. Hierdurch kann es möglich sein, eine kompaktere Bauweise zu erzielen, da eine zusätzliche Verrohrung, Verschlauchung oder anderweitige Zuführung des Schmiermittels an die erste und/oder zweite Schmiermittelpumpe entfallen kann.

Bei einem Schmiermittelsystem gemäß einem Ausführungsbeispiel können die erste Schmiermittelpumpe und die zweite Schmiermittelpumpe so beispielsweise für unterschiedliche Schmiermittel ausgebildet sein. So kann beispielsweise die erste Schmiermittelpumpe für ein Fett ausgelegt sein, während die zweite Schmiermittelpumpe für ein Öl ausgelegt sein kann. Selbstverständlich können die erste und die zweite Schmiermittelpumpe jedoch auch für andere als die zuvor genannten Schmiermittel ausgebildet sein.

Bei einem Schmiermittelsystem gemäß einem Ausführungsbeispiel kann so die erste Schmiermittelpumpe und gegebenenfalls ein implementiertes erstes Schmiermittelreservoir und die zweite Schmiermittelpumpe sowie ein gegebenenfalls implementiertes zweites Schmiermittelreservoir ein zweites Schmiermittel umfassen. In diesem Zusammenhang sollte darauf hingewiesen werden, dass im Rahmen der vorliegenden Beschreibung ein Schmiermittelsystem bei Weitem nicht auf die Verwendung flüssiger oder fettartiger Schmiermittel beschränkt ist. Grundsätzlich kann mit Hilfe eines Schmiermittelsystems gemäß einem Ausführungsbeispiel jegliches Schmiermittel gefördert werden, welches durch eine entsprechende Schmiermittelpumpe über einen Schmiermittelpfad einer Verbrauchsstelle bereitgestellt werden kann. So umfasst ein Schmiermittel, wie es im Rahmen der vorliegenden Beschreibung gemeint ist, beispielsweise ein Fett, ein Öl, aber auch andere Schmierstoffe und Schmiermittel.

Ebenso kann ergänzend oder alternativ bei einem Schmiermittelsystem gemäß einem Ausführungsbeispiel die erste Schmiermittelpumpe und die zweite Schmiermittelpumpe für unterschiedliche Schmiermittelparameter, also beispielsweise unterschiedliche Schmiermitteltemperaturen ausgebildet und vorbereitet sein. So kann beispielsweise eine der Schmiermittelpumpen ein Heizelement oder auch ein Kühlelement umfassen, um eine Anpassung der Schmiermitteltemperatur zu ermöglichen.

Bei einem Schmiermittelsystem gemäß einem Ausführungsbeispiel kann die erste und die zweite Schmiermittelpumpe derart ausgebildet sein, dass ein Verhältnis einer von der ersten und der zweiten Schmiermittelpumpe geförderten Schmiermittelmenge oder ein Verhältnis eines von der ersten und der zweiten Schmiermittelpumpe bereitgestellten Drucks des von dieser jeweils geförderten Schmiermittels wenigstens 2:1 oder höchstens 1:2 beträgt. Unabhängig davon, ob die erste und die zweite Schmiermittelpumpe unterschiedliche Schmiermittel fördern, kann hierdurch gegebenenfalls eine noch flexiblere Versorgung der beiden Verbrauchsstellen, die auch als Schmierstellen bezeichnet werden, mit dem oder den betreffenden Schmiermitteln erfolgen, da die zweite Schmiermittelpumpe hinsichtlich der von ihr bereitgestellten Schmiermittelmenge oder des von ihr bereitgestellten Drucks gezielt an die Bedürfnisse des zweiten Schmiermittelpfads und/oder der zweiten Verbrauchsstelle angepasst werden können. So kann beispielsweise im Falle einer Versorgung über Kapillarleitungen unabhängig von der benötigten Schmiermittelmenge beispielsweise eine Förderung mit einem höheren Druck erfolgen. Andererseits kann bei einem besonders druckempfindlichen Schmiermittelpfad oder bei einer besonders druckempfindlichen Verbrauchsstelle gegebenenfalls auch ein besonders niedriger Schmiermitteldruck bereitgestellt werden, ohne dass jedoch unnötig Energie von der ersten Schmiermittelpumpe in Form von Strömungsbegrenzern oder anderen Stellen in dem zweiten Schmiermittelpfad ungenutzt dissipiert werden. So kann durch den Einsatz eines solchen Schmiermittelsystems eine gegebenenfalls energieeffizientere und damit flexiblere Versorgung der Verbrauchsstellen mit dem Schmiermittel oder den Schmiermitteln ermöglicht werden. Bei anderen Ausführungsbeispielen können die zuvor genannten Verhältnisse gegebenenfalls auch 3:1 bzw. 1:3, 5:1 bzw. 1:5, 10:1 bzw. 1:10 oder auch 20:1 bzw. 1:20 betragen.

Bei einem Schmiermittelsystem gemäß einem Ausführungsbespiel kann die zweite Schmiermittelumpe eine Mehrzahl von Pumpenelementen umfassen. Ebenso kann das Schmiermittelsystem in diesem Fall eine Mehrzahl zweiter Verbrauchsstellen und eine Mehrzahl zweiter Schmiermittelpfade umfassen, wobei jedes Pumpenelement der Mehrzahl von Pumpenelementen über einen zweiten Schmiermittelpfad der Mehrzahl von zweiten Schmiermittelpfaden mit einer zweiten Verbrauchsstelle der Mehrzahl zweiter Verbrauchsstellen gekoppelt ist. Hierdurch kann es möglich sein, mit Hilfe der von der ersten Schmiermittelpumpe bereitgestellten Energie auch mehrere Verbrauchsstellen mit dem von der zweiten Schmiermittelpumpe geförderten Schmiermittel zu versorgen. Selbstverständlich können die einzelnen Pumpenelemente gegebenenfalls hinsichtlich der Schmiermittelparameter, der bereitgestellten Drücke und/oder der bereitgestellten Schmiermittelmengen entsprechend an die Bedürfnisse der jeweiligen zweiten Schmiermittelpfade und/oder der jeweiligen zweiten Verbrauchsstellen angepasst sein. An dieser Stelle sollte darauf hingewiesen werden, dass eine mechanische Komponente, beispielsweise eine Baugruppe oder auch ein einzelnes Bauteil durchaus mehr als eine Verbrauchsstelle aufweisen kann. So kann beispielsweise im Falle eines Lagerrings dieser eine Mehrzahl von Schmiermittelaustrittsöffnungen im Bereich seiner Laufbahn aufweisen, die jeweils als eigenständige Verbrauchsstelle aufgefasst werden können. Selbstverständlich können diese jedoch auch vollständig oder teilweise als eine Verbrauchsstelle aufgefasst werden, wenn beispielsweise eine entsprechende Zuführung des Schmiermittels im Inneren des Lagerrings über einen einzelnen Zufluss zu dem Lagerring realisiert wird.

Bei einem Schmiermittelsystem gemäß einem Ausführungsbeispiel kann auch die erste Schmiermittelpumpe eine Mehrzahl von Pumpenelementen umfassen. Entsprechend kann das Schmiermittelsystem ebenso eine Mehrzahl erster Verbrauchsstellen und eine entsprechende Mehrzahl erster Schmiermittelpfade umfassen. Auch hier kann jedes Pumpenelement über einen ersten Schmiermittelpfad der Mehrzahl erster Schmiermittelpfade mit einer entsprechenden ersten Verbrauchsstelle der Mehrzahl erster Verbrauchsstellen gekoppelt sein. Allerdings kann gegebenenfalls bei einem solchen Schmiermittelsystem auch die Zahl der Pumpenelemente größer sein als die Zahl der Verbrauchsstellen und die Zahl der Schmiermittelpfade. So kann bei einem solchen Ausführungsbeispiel die erste Schmiermittelpumpe über ein Pumpenelement beispielsweise ausschließlich die zweite Schmiermittelpumpe ansteuern bzw. mit Energie versorgen.

Bei einem Schmiermittelsystem gemäß einem Ausführungsbeispiel können so die Pumpenelemente der ersten und/oder der zweiten Schmiermittelpumpe, aber auch gegebenenfalls weiterer umfasster Schmiermittelpumpen vollständig oder teilweise als Kolbenpumpelemente ausgeführt sein. Im Falle der ersten Schmiermittelpumpe können diese beispielsweise über eine Exzenteransteuerung und gegebenenfalls über einen elektrischen Aktuator, also beispielsweise einen elektrischen Motor angesteuert werden.

Ein Schmiermittelsystem gemäß einem Ausführungsbeispiel kann ferner eine dritte Schmiermittelpumpe umfassen, die mit einem dritten Schmiermittelpfad zu einer dritten Verbrauchsstelle gekoppelt ist. Die dritte Verbrauchsstelle ist hierbei von der ersten und der zweiten Verbrauchsstelle verschieden. Der erste, der zweite und der dritte Schmiermittelpfad sind voneinander getrennt, wie dies bereits zuvor erläutert wurde. Die dritte Schmiermittelpumpe wird hierbei ebenfalls von der ersten Schmiermittelpumpe angesteuert. Hierdurch kann eine gegebenenfalls noch flexiblere Versorgung mit dem gleichen oder einem weiteren, beispielsweise dritten, Schmiermittel erfolgen. Auch die dritte Schmiermittelpumpe wird von der ersten Schmiermittelpumpe mit der zur Förderung notwendigen Energie durch die oder eine andere von dieser geförderten Schmiermittelmenge versorgt. Auch im Hinblick auf die dritte Schmiermittelpumpe, die dritte Verbrauchsstelle und den dritten Schmiermittelpfad sind die zuvor erläuterten Ausgestaltungen implementierbar.

Bei einem solchen Schmiermittelsystem gemäß einem Ausführungsbeispiel können die zweite Schmiermittelpumpe und die dritte Schmiermittelpumpe parallel geschaltet sein. Hierdurch kann gegebenenfalls eine (quasi-) gleichzeitige Abgabe der jeweiligen von der zweiten bzw. dritten Schmiermittelpumpe bereitgestellten Schmiermittelmenge ermöglicht werden. Unabhängig hiervor können jedoch die zweite und die dritte Schmiermittelpumpe über eine gemeinsame Schmiermittelleitung oder einen gemeinsamen Schmiermittelpfad hintereinander an einen Ausgang der ersten Schmiermittelpumpe geschaltet werden.

Ein Schmiermittelsystem gemäß einem Ausführungsbeispiel kann ferner einen Verteiler in dem ersten Schmiermittelpfad umfassen, der beispielsweise zwischen der ersten und der zweiten Schmiermittelpumpe oder auch hinter der zweiten Schmiermittelpumpe fluidtechnisch angeordnet ist. Über den Verteiler kann dann die erste Verbrauchsstelle mit der ersten Schmiermittelpumpe gekoppelt sein.

Bei einer Windkraftanlage, die ein Schmiermittelsystem gemäß einem Ausführungsbeispiel umfasst, wie dies zuvor beschrieben wurde, kann die erste und die zweite Verbrauchsstelle eine Komponente der Windkraftanlage der Gruppe von Komponenten umfassen. Die Gruppe von Komponenten umfasst hierbei beispielsweise eine Rotorblattlager, ein Anstellwinkellager, ein Azimutlager, ein Hauptwellenlager, ein Generatorlager, ein Getriebelager, ein Getriebe, einen Rotorblattantrieb und einen Azimutantrieb. Ein Rotorblattlager oder ein Anstellwinkellager kann so beispielsweise zwischen einem Rotorblatt und einem Rotorgehäuse angeordnet sein, mit dessen Hilfe eine verschwenkbare Verbindung des Rotorblatts mit dem Rotorgehäuse ermöglicht wird. Ein Azimutlager kann beispielsweise zwischen einer Gondel und einem Turm der Windkraftanlage angeordnet sein und eine verdrehbare bzw. verschwenkbare Lagerung der Gondel zu dem Turm der Windkraftanlage ermöglichen. Ein Hauptwellenlager kann zur Lagerung einer Hauptwelle der Windkraftanlage herangezogen werden, die mit einem Rotor bzw. einem Rotorgehäuse der Windkraftanlage verbunden ist. Ein Generatorlager kann ein Lager des elektrischen Generators zur Erzeugung der elektrischen Energie der Windkraftanlage sein. Entsprechend kann ein Getriebelager oder auch ein Getriebe zwischen der Hauptwelle und dem elektrischen Generator angeordnet sein, um eine Drehzahlanpassung zwischen Hauptwelle und Generator zu ermöglichen. Ebenso kann eine Komponente ein Rotorblattantrieb oder ein Azimutantrieb sein, der zur mechanischen Bewegung des Rotorblatts bzw. zur mechanischen Bewegung der Gondel herangezogen werden kann. Selbstverständlich sind bei einer Windkraftanlage gemäß einem Ausführungsbeispiel nicht alle aufgezählten Komponenten implementiert. So kann beispielsweise eine Implementierung eines Getriebes oder aber auch gegebenenfalls eine Implementierung eines Generatorlagers entfallen, um nur ein Beispiel zu nennen. Ebenso kann gegebenenfalls eine Implementierung des Rotorblattantriebs oder auch des Azimutantriebs entfallen. Umfasst das Schmiermittelsystem eine dritte Verbrauchsstelle, so kann auch diese eine Komponente der Gruppe von Komponenten sein oder umfassen.

Nachfolgend werden Ausführungsbeispiele im Zusammenhang mit den beigefügten Figuren näher beschrieben und erläutert.

Fig. 1 zeigt eine schematische Darstellung eines Schmiermittelsystems gemäß einem Ausführungsbeispiel;

Fig. 2 zeigt eine Querschnittsdarstellung einer Mehrkolbenpumpe, wie sie beispielsweise als zweite Schmiermittelpumpe bei einem Schmiermittelsystem gemäß einem Ausführungsbeispiel eingesetzt werden kann; und

Fig. 3 zeigt eine schematische Querschnittsdarstellung durch eine Windkraftanlage gemäß einem Ausführungsbeispiel, welches zwei Schmiermittelsysteme gemäß einem Ausführungsbeispiel umfasst.

Im Rahmen der vorliegenden Beschreibung werden zusammenfassende Bezugszeichen für Objekte, Strukturen und andere Komponenten verwendet werden, wenn die betreffende Komponente an sich oder mehrerer entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren. Bei der nachfolgenden Beschreibung von Ausführungsformen bezeichnen daher gleiche Bezugszeichen gleiche oder vergleichbare Komponenten.

Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Komponenten innerhalb eines Ausführungsbeispiels bezüglich eines Parameters identisch, bezüglich eines anderen Parameters jedoch unterschiedlich ausgeführt sein können.

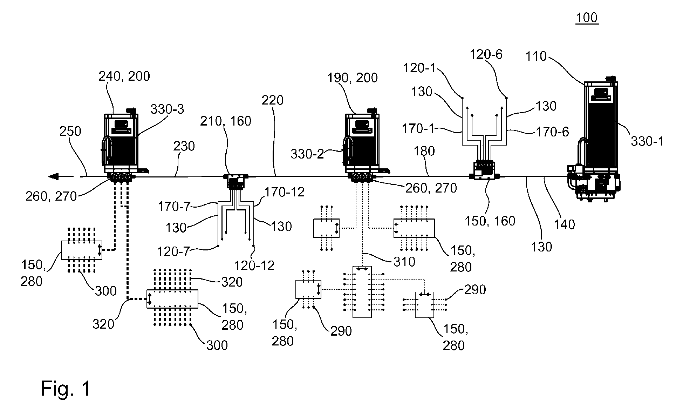

Bevor im Zusammenhang mit den Fig. 1 bis 3 Ausführungsbeispiele eines Schmiermittelsystems und einer Windkraftanlage näher erläutert werden sollen, bietet es sich an, an dieser Stelle darauf hinzuweisen, dass ein Schmiermittel im Sinne der vorliegenden Beschreibung ein flüssiges, fettartiges oder anders geartetes Schmiermittel sein kann. So werden im Verlauf der vorliegenden Beschreibung häufig fettbasierte Schmiermittelsysteme beschrieben, was jedoch nicht als einschränkend zu verstehen ist.

Es können vielmehr im Rahmen von Ausführungsbeispielen eines Schmiermittelsystems und einer Windkraftanlage auch andere Schmiermittel oder Schmierstoffe eingesetzt werden. So können beispielsweise Schmieröle für einzelne Komponenten oder Verbrauchsstellen verwendet werden.

Fig. 1 zeigt eine schematische Darstellung eines Schmiermittelsystems 100 gemäß einem Ausführungsbeispiel. Das Schmiermittelsystem 100 umfasst eine erste Schmiermittelpumpe 110, die mit einer ersten Verbrauchsstelle 120 über einen ersten Schmiermittelpfad 130 gekoppelt ist. Genauer gesagt, weist das in Fig. 1 gezeigte Ausführungsbeispiel eines Schmiermittelsystems 100 eine Mehrzahl erster Verbrauchsstellen 120-1, ..., 120-6 auf, von denen zur Vereinfachung der Darstellung in Fig. 1 lediglich zwei mit einem entsprechenden Bezugszeichen gekennzeichnet sind. Die auch als Schmierstellen bezeichneten Verbrauchsstellen 120 sind hierbei in Fig. 1 vereinfacht als Punkte gezeichnet.

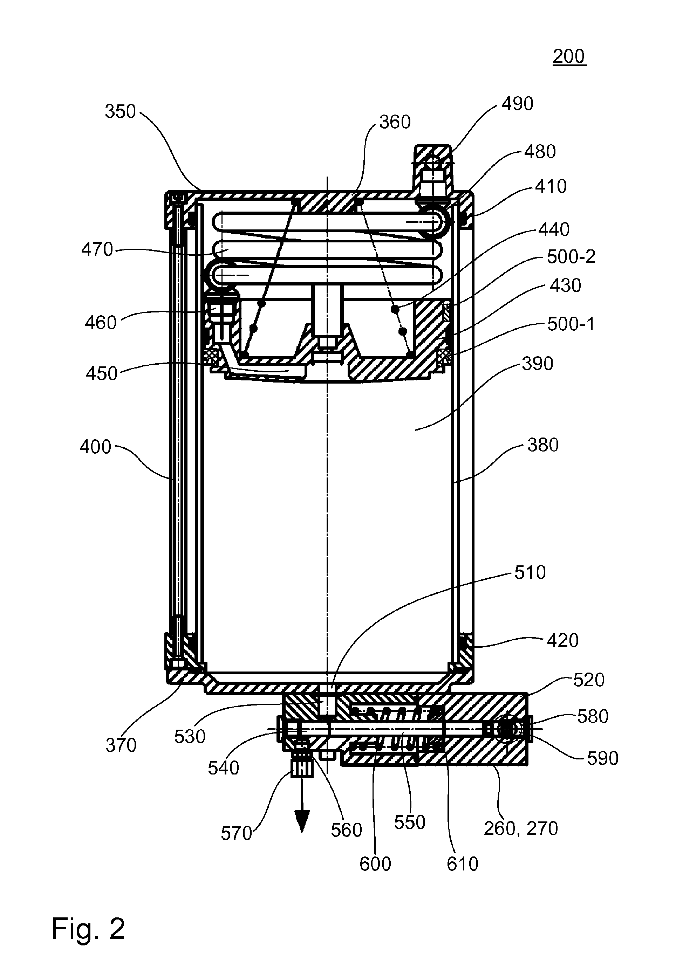

Entsprechend weist das Schmiermittelsystem 100 auch eine Mehrzahl von ersten Schmiermittelpfaden 130 auf. Die ersten Schmiermittelpfade 130, die zu den ersten Verbrauchsstellen 120 führen, weisen hierbei einen gemeinsamen Abschnitt 140 auf, der die erste Schmiermittelpumpe 110 und einen Verteiler 150 fluidtechnisch verbinden. Der Verteiler 150 ist hierbei ein Kolbenverteiler 160, der neben einer Mehrzahl von Anschlüssen für individuelle Abschnitte 170-1, ..., 170-6 der ersten Schmiermittelpfade 130 einen weiteren Anschluss für einen weiteren Abschnitt 180 des entsprechenden Schmiermittelpfads 110 aufweist, der mit einem Steuereingang einer zweiten Schmiermittelpumpe 190 fluidtechnisch verbunden ist. Bei der zweiten Schmiermittelpumpe 190 handelt es sich genauer gesagt um eine hydraulische Mehrkolbenpumpe 200. Diese wird im Zusammenhang mit Fig. 2 noch näher beschrieben.

Das Schmiermittelsystem 100 weist ferner einen weiteren Verteiler 210 auf, der ebenfalls als Kolbenverteiler 160 ausgeführt ist. Der weitere Verteiler 210 ist über einen weiteren Abschnitt 220 eines den oder die ersten Schmiermittelpfade 130 bildende Verrohrung mit einem Anschluss der zweiten Schmiermittelpumpe 190 gekoppelt, an der das von der ersten Schmiermittelpumpe 110 geförderte Schmiermittel zumindest teilweise aus der zweiten Schmiermittelpumpe 190 wieder heraustritt. Dieses wird über den weiteren Abschnitt 220 und den weiteren Verteiler 210 weiteren ersten Verbrauchsstellen 120-7, ..., 120-12 über entsprechende (individuelle) Abschnitte 170-7, ..., 170-12 bereitgestellt. Die entsprechenden ersten Schmiermittelpfade 130-7, ..., 130-12 umfassen so jeweils den gemeinsamen Abschnitt 140, den Verteiler 150, einen Abschnitt durch die zweite Schmiermittelpumpe 190, den weiteren Abschnitt 220 und die Abschnitte 170-7, ..., 170-12. Zur Vereinfachung der Darstellung sind auch hier lediglich die erste Verbrauchsstelle 120-7 und die erste Verbrauchsstelle 120-12 sowie die entsprechenden Abschnitt 170-7 und 170-12 mit einem Bezugszeichen versehen.

Das Schmiermittelsystem 100 umfasst ferner einen zusätzlichen Abschnitt 230 eines Schmiermittelpfads, der eine dritte Schmiermittelpumpe 240 Eingangsseitig mit der ersten Schmiermittelpumpe 110 fluidtechnisch verbindet. Die dritte Schmiermittelpumpe ist so über den zusätzlichen Abschnitt 230, den weiteren Abschnitt 220, den dazwischenliegenden weiteren Verteiler 210 die zweite Schmiermittelpumpe 190, den weiteren Abschnitt 180, den Verteiler 150 und den gemeinsamen Abschnitt 140 mit der ersten Schmiermittelpumpe 110 verbunden. Von dieser Erhält die dritte Schmiermittelpumpe 240 ebenfalls eine Schmiermittelmenge, die unter Druck von der ersten Schmiermittelpumpe an die dritte Schmiermittelpumpe 240 geliefert wird, sodass die dritte Schmiermittelpumpe 240 von der ersten Schmiermittelpumpe 200 ebenfalls mit Energie versorgt wird. Die dritte Schmiermittelpumpe 240 ist hier ebenfalls als Mehrkolbenpumpe 200 ausgestaltet, wie sie im Zusammenhang mit Fig. 2 noch näher beschrieben wird.

An einem Ausgang der dritten Schmiermittelpumpe 240 für das von der ersten Schmiermittelpumpe 110 geförderte Schmiermittel kann optional über einen Abschnitt 250 gegebenenfalls eine weitere Schmiermittelumpe, ein weiterer Verteiler 150 oder eine andere Komponente angeschlossen werden, wie dies in Fig. 1 durch den nach links weisenden Pfeil angedeutet ist.

Ergänzend oder alternativ kann der Abschnitt 250 auch durch einen Blindflansch oder einen anderen Verschluss verschlossen sein. Selbstverständlich kann der Abschnitt 250 auch entfallen, wenn beispielsweise der entsprechende Ausgang der Mehrkolbenpumpe 200, also der entsprechende Ausgang der dritten Schmiermittelpumpe 240 verschlossen wird.

Sowohl die zweite Schmiermittelpumpe 190 als auch die dritte Schmiermittelpumpe 240 sind, wie bereits zuvor erläutert wurde, als Mehrkolbenpumpe 200 ausgestaltet. Diese weisen jeweils eine Mehrzahl von Pumpelementen 260 bzw. Kolbenpumpelementen 270 auf. Die Pumpelemente 260 sind hierbei über Leitungssysteme mit Verteilern 150 gekoppelt, die als Progressivverteiler 280 ausgeführt und eingangsseitig von der zweiten bzw. dritten Schmiermittelpumpe 190, 240 das jeweils von diesen Schmiermittelpumpen geförderte Schmiermittel unter Druck empfangen und über eine entsprechende Mehrzahl von Ausgängen an zweite bzw. dritte Verbrauchsstellen 290, 300 abgeben. Von diesen sind zur Vereinfachung der Darstellung in Fig. 1 jeweils nur einzelne mit Bezugszeichen versehen. Die zweite Schmiermittelpumpe 190 bzw. die dritte Schmiermittelpumpe 240 sind so über eine Mehrzahl von zweiten Schmiermittelpfaden 310 bzw. einer Mehrzahl dritter Schmiermittelpfade 320 mit den entsprechenden zweiten und dritten Verbrauchsstellen 290, 300 fluidtechnisch verbunden. Die zweiten Schmiermittelpfade 310 sind hierbei in Fig. 1 durch dünne gestrichelte Linien, die dritten Schmiermittelpfade 320 durch dickere Schmiermittelpfade gekennzeichnet.

Bei der in Fig. 1 gezeigten fluidtechnischen Kopplung der einzelnen Verbrauchsstellen 290, 300 unterscheidet sich die Führung der Schmiermittelpfade 310, 320 dahingehend, dass bei der dritten Schmiermittelpumpe 240 zwei Ausgänge der Pumpelemente 260 parallel zu einem der Progressivverteiler 280 geführt sind. Im Unterschied hierzu sind die Ausgänge der Pumpelemente 260 der zweiten Schmiermittelpumpe 190 jeweils einzeln zu einem Verteiler 280 geführt. Die Progressivverteiler 280 können hierbei aus kaskadiert verschaltet werden, wie dies im Zusammenhang mit den zweiten Schmiermittelpfaden 310 und der zweiten Schmiermittelpumpe 190 gezeigt ist.

Das Schmiermittelsystem 100, wie es in Fig. 1 gezeigt ist, stellt hierbei eine Fettschmieranlage dar, welches als kombiniertes Einleitungssystem und Progressivsystem arbeitet. Die erste Schmiermittelpumpe 110 zusammen mit ihren Schmiermittelpfaden 130 und den ersten Verbrauchsstellen 120 bildet hierbei ein Einleitungssystem, welches beispielsweise im Zusammenhang mit einem ersten Schmiermittel, beispielsweise einer ersten Fettsorte betrieben werden kann. Im Unterschied hierzu bilden die zweite Schmiermittelpumpe 190 zusammen mit ihren zweiten Verbrauchsstellen 290 und den zweiten Schmiermittelpfaden 310 ein Progressivsystem, welches beispielsweise mit einer unterschiedlichen Fettsorte, beispielsweise einer zweiten Fettsorte verwendet werden kann. Auch die dritte Schmiermittelpump 240 zusammen mit den dritten Verbrauchsstellen 300 und den dritten Schmierpfaden 320 bildet ein Progressivsystem, welches ebenfalls für eine dritte Fettsorte ausgelegt sein kann. Bei einem Progressivsystem teilen die Progressivteiler 280 die ihnen während der Förder- bzw. Kontaktzeit zugeführte Schmierstoffmenge im Wesentlichen nacheinander den Schmierstellen zu. Hierbei versorgen sie jede Verbrauchsstelle entsprechend einer vorbestimmten Dosiermenge. Darüber hinaus verteilen die Progressivverteiler 280 die an ihrem Eingang eingehende Schmiermittelmenge vollständig auf ihre Ausgänge.

Im Unterschied hierzu stellen die Kolbenverteiler 160 Einleitungsverteiler dar, die eine im Wesentlichen gleichzeitige Verteilung des Schmiermittels an die verschiedenen Schmier- bzw. Verbrauchsstellen 120 ermöglicht. Hierbei ist typischerweise einem jeden Ausgang eines entsprechenden Kolbenverteilers genau eine Verbrauchsstelle 120 zugeordnet. Selbstverständlich kann jedoch hiervon gegebenenfalls abgewichen werden. Insbesondere weisen die Kolbenverteiler 160 einen Ausgang für das in sie eintretende Schmiermittel auf, der mit einem weiteren Kolbenverteiler oder auch einer Mehrkolbenpumpe 200, also beispielsweise der zweiten Schmiermittelpumpe 190 oder der dritten Schmiermittelpumpe 240 eingangsseitig gekoppelt werden kann. Die Kolbenverteiler 160 unterscheiden sich somit hinsichtlich ihrer Funktionsweise von den Progressivverteilern 280 einerseits hinsichtlich der zeitlichen Ausgestaltung der Zuteilung des eingehenden Schmiermittels und andererseits hinsichtlich der Tatsache, dass die Kolbenverteiler 160 einen Anschluss aufweisen, an dem nicht verteiltes Schmiermittel an weitere Komponenten des Schmiermittelsystems weitergegeben werden kann.

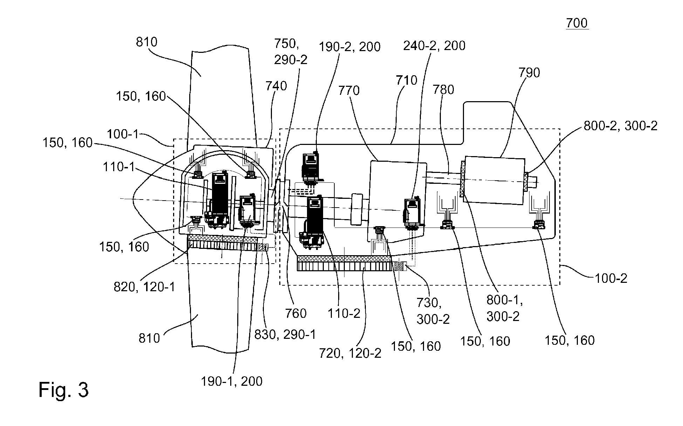

Wie bereits zuvor erläutert wurde, können die Schmiermittel, die durch die einzelnen Schmiermittelpumpen 110, 190, 240 gefördert werden, vollständig oder teilweise unterschiedlich sein. Sie können sich gegebenenfalls auch lediglich im Hinblick auf bestimmte Schmiermittelparameter, beispielsweise eine Temperatur unterscheiden. So werden bei dem in Fig. 3 gezeigten Schmiermittelsystem 100 drei unterschiedliche Fettsorten verwendet. Selbstverständlich können bei Ausführungsbeispielen eines Schmiermittelsystems auch weniger unterschiedliche Schmiermittel eingesetzt werden, als Pumpen in dem entsprechenden Schmiermittelsystem 100 umfasst sind. Ebenso können unterschiedliche Schmiermittel also beispielsweise Öle und gleichzeitig Fette im Rahmen des gleichen Schmiermittelsystems 100 an die entsprechenden Verbrauchsstellen 120, 290, 300 verteilt werden.

Ebenso kann durch den Einsatz von Heizelementen und/oder Kühlelementen gegebenenfalls auch eine Anpassung der Temperatur des betreffenden Schmiermittels erfolgen, bevor diese über die einzelnen Schmiermittelpfade 130, 310, 320 an ihre jeweiligen Verbrauchsstellen 120, 290, 300 verteilt werden. Auch kann eine Ausgestaltung der Schmiermittelpumpen 110, 190, 240 beispielsweise derart erfolgen, dass sich ein Verhältnis der von den jeweilig beteiligten Schmiermittelpumpen geförderten Schmiermittelvolumen bzw. Schmiermittelmenge und/oder ein von diesen bereitgestellter Druck ein vorbestimmtes Verhältnis aufweist, das beispielsweise wenigstens 2:1 oder höchstens 1:2 beträgt. Bei anderen Ausführungsbeispielen eines Schmiermittelsystems 100 können die zuvor genannten Verhältnisse auch wenigstens 3:1 bzw. höchstens 1:3, wenigstens 5:1 bzw. höchstens 1:5, wenigstens 10:1 bzw. höchstens 1:10 oder wenigstens 20:1 bzw. höchstens 1:20 betragen. Hierdurch kann durch den Einsatz verschiedener Schmiermittelpumpen 110, 190, 240 gegebenenfalls eine Anpassung des Schmiermittelbedarfs der einzelnen Verbrauchsstellen 120, 290, 300 und/oder eine Anpassung der entsprechenden notwendigen Förderdrücke durch die Pumpen erzielt werden. So kann gegebenenfalls der Einsatz eines Strömungsbegrenzers oder eines anderes, einen Durchfluss des Schmiermittels hemmenden Elements eingespart werden, was zu einer Verbesserung der Energieeffizienz und damit bei einer Betrachtung der zur Verfügung stehenden Energiemenge zu einer insgesamt flexibleren oder auch effizienteren Versorgung der Verbrauchsstellen mit dem Schmiermittel führen kann.

Die zweite Schmiermittelpumpe 190 und - im Falle ihrer Implementierung - auch die dritte Schmiermittelpumpe 240 erhalten im Unterschied zu der ersten Schmiermittelpump 110 die zum Betrieb notwendige Energie ausschließlich durch die erste Schmiermittelpumpe 110. Anders ausgedrückt, wird die zweite Schmiermittelpumpe 190 und gegebenenfalls die dritte Schmiermittelpumpe 240 ausschließlich durch die erste Schmiermittelpumpe 110 durch eine von dieser geförderten Schmiermittelmenge angesteuert.

Im Unterschied hierzu ist die erste Schmiermittelpumpe bei dem in Fig. 1 gezeigten Ausführungsbeispiel elektrisch angesteuert und stellt so ein elektrisches Pumpenaggregat dar. Bei anderen Ausführungsbeispielen können jedoch auch andere Schmiermittelpumpen als erste Schmiermittelpumpe 110 eingesetzt werden.

Aufgrund der Tatsache, dass die zweite Schmiermittelpumpe 190 und gegebenenfalls auch die dritte Schmiermittelpumpe 240 ihre zum Betrieb notwendige Energie ausschließlich von der ersten Schmiermittelpumpe 110 erhält, kann es ratsam sein, die erste Schmiermittelpumpe 110 derart auszulegen, dass diese eine Ausgangsleistung aufweist, die wenigstens ein 1,25-Faches einer Ausgangsleistung der zweiten Schmiermittelpumpe 190 oder wenigstens ein 1,25-Faches einer Gesamtausgangsleistung der zweiten Schmiermittelpumpe 190 und der dritten Schmiermittelpumpe 240 beträgt. Hierdurch kann einerseits eine Versorgung der ersten Verbrauchsstelle 120 bzw. der mehreren ersten Verbrauchsstellen 120 und eine Versorgung der über die zweiten und dritten Schmiermittelpfade 310, 320 versorgten zweiten und dritten Verbrauchsstellen 290, 300 gewährleistet werden.

Bei dem in Fig. 1 gezeigten Schmiermittelsystem 100 sind die zweite Schmiermittelpumpe 190 und die dritte Schmiermittelpumpe 240 parallel geschaltet, sodass diese zumindest im Wesentlichen bzw. quasi eine gleichzeitige Abgabe der jeweiligen Schmiermittelmengen der beiden Schmiermittelpumpen 190, 240 ermöglichen. Hierbei muss gegebenenfalls eine Ausbreitungsgeschwindigkeit des Drucks in dem die einzelnen Schmiermittelpfade bildenden Leitungssystem berücksichtigt werden. Es liegt bei dem Schmiermittelsystem 100 wie es in Fig. 1 gezeigt ist, somit trotz der Tatsache, dass zwischen der zweiten Schmiermittelpumpe 190 und der dritten Schmiermittelpumpe 240 die Abschnitte 220 und 230 sowie der Verteiler 210 liegt, eine Parallelschaltung der beiden Schmiermittelpumpen 190, 240 vor. Selbstverständlich können bei anderen Ausführungsbespielen auch die zweite und die dritte Schmiermittelpumpe 190, 240 keine oder weniger gemeinsame Abschnitte der entsprechenden Verrohrung oder Verschlauchung aufweisen.

Um eine Trennung der entsprechenden Verbrauchsstellen 120, 290, 300 und eine Vermischung der entsprechenden, gegebenenfalls unterschiedlichen Schmiermittel zu unterbinden, sind der erste Schmiermittelpfad 130 und der zweite Schmiermittelpfad 310 und - im Falle einer Implementierung - auch der dritten Schmiermittelpumpe 240 voneinander getrennt, sodass keine unmittelbare fluidtechnische Verbindung zwischen diesen Schmiermittelpfaden besteht. Die Schmiermittelpfade 120, 310, 320 stellen hierbei eine Verbindung eines Ausgangs einer Schmiermittelpumpe mit einem Zufluss der entsprechenden Verbrauchsstellen 120, 290, 300 dar. Zumindest zwischen den betreffenden Schmiermittelpumpen 110, 190, 240 bis hin zu der entsprechenden Verbrauchsstelle 120, 290, 300 sind so der oder die ersten Schmiermittelpfade 130 von dem oder den zweiten Schmiermittelpfaden 310 und gegebenenfalls von dem oder den dritten Schmiermittelpfaden 320 vollständig fluidtechnisch getrennt.

Bei dem in Fig. 1 gezeigten Schmiermittelsystem 100 weisen die drei vorgesehenen Schmiermittelpumpen 110, 190, 240 jeweils einen Schmiermittelbehälter bzw. ein Schmiermittelreservoir 330-1, 330-2 und 330-3 auf. Hierdurch kann eine kompaktere Bauweise des Schmiermittelsystems 110 gegebenenfalls realisiert werden, da zusätzliche Verrohrungen oder Verschlauchungen zum Zuführen des betreffenden Schmiermittels zu den drei Schmiermittelpumpen 110, 190, 240 gegebenenfalls entfallen kann. Selbstverständlich können bei anderen Ausführungsbeispielen einzelne oder alle Schmiermittelpumpen 110, 190, 240 auch ohne ein entsprechendes Schmiermittelreservoir 330 implementiert werden. Dies kann beispielsweise dann sinnvoll sein, wenn aufgrund einer schwer zugänglichen Stelle ohnehin zum Nachfüllen des betreffenden Schmiermittels eine Verrohrung oder Verschlauchung vorgesehen sein muss. So kann beispielsweise an schwer zugänglichen und/oder beengten Stellen in einer Anlage ein Entfallen eines Schmiermittelreservoirs 330 angezeigt sein.

Im Hinblick auf die Reihenfolge der in Fig. 1 gezeigten Komponenten, also insbesondere der Anordnung der Verteiler 150, 210 im Verhältnis zu den beiden Schmiermittelpumpen 190, 240 kann es bei anderen Ausführungsbeispielen gegebenenfalls ratsam sein, von dieser Reihenfolge abzuweichen. So kann beispielsweise der Verteiler 150 auch hinter der zweiten Schmiermittelpumpe 190 angeordnet sein. Ebenso kann der weitere Verteiler 210 hinter der dritten Schmiermittelpumpe 240 liegen, sofern diese überhaupt implementiert sind. So handelt es sich bei den Verteilern 150, 210 sowie um die anderen in Fig. 1 gezeigten Verteiler 150 um optionale Komponenten.

Darüber hinaus kann das Schmiermittelsystem 100 in Fig. 1 beispielsweise weitere Komponenten umfassen, etwa einen Kolbenhubanzeiger oder einen Kolbendetektor, einen Füllstandsanzeiger, einen Füllstandsschalter oder einen Füllstandssensoren, sowie Druckbegrenzungsventile oder einen Drucksensor zum Erfassen eines Drucks in einem oder mehreren der Schmiermittelpfade 130, 310, 320.

Das Schmierstoffsystem 100, wie es beispielsweise in Fig. 1 gezeigt ist, kann beispielsweise in Zentralschmieranlagen eingesetzt werden, bei denen verschiedene Schmierstoffe und Schmiermittel verwendet werden. Durch den Einsatz eines solchen Schmiersystems 100 gemäß einem Ausführungsbeispiel kann gegebenenfalls eine ansonsten konventionell jeweils vorausgesetzte Pumpe mit einem entsprechenden Schmierstoffbehälter und einer eigenen Steuerung eingespart werden.

Fig. 2 zeigt eine Querschnittsdarstellung einer Mehrkolbenpumpe 200, wie sie beispielsweise als zweite Schmiermittelpumpe 190 oder auch als dritte Schmiermittelpumpe 240 im Rahmen eines Schmiermittelsystems 100 eingesetzt werden kann. Die Mehrkolbenpumpe 200 weist ein Gehäuse 350 auf, welches einen Deckel 360 sowie eine Bodenplatte 370 umfasst, die beispielsweise aus einem Aluminium-Druckguss bestehen können. Das Gehäuse 350 umfasst ferner einen Zylinder 380, der beispielsweise aus einem Glas, einem Quarzglas, einem Kunststoffe, einem Metall oder einer Metalllegierung gefertigt sein kann. Bei der in Fig. 2 gezeigten Mehrkolbenpumpe 200 handelt es sich bei dem Zylinder 380 genauer gesagt um einen Quarzglaszylinder. Dieser bildet zusammen mit dem Deckel und der Bodenplatte einen Schmiermittelbehälter 390, der im Falle einer Befüllung mit einem Fett als Schmiermittel auch als Fettbehälter bezeichnet wird.

Das Gehäuse 350 umfasst ferner eine außerhalb des Zylinders 380 angeordnete Verschraubung 400, mit deren Hilfe der Deckel 360 und die Bodenplatte 370 mechanisch miteinander verbunden sind. Der Zylinder 380 ist hierbei gegenüber dem Deckel über einen O-Ring 410 und gegenüber der Bodenplatte 370 mit Hilfe eines O-Rings 420 abgedichtet.

Im Inneren des Schmiermittelbehälters 390 ist ein Kolben 430 angeordnet, der im Falle einer Befüllung mit Fett als Schmiermittel auch als Fettfolgekolben bezeichnet wird. Der Fettfolgekolben ist über eine konische Feder 440 mit dem Deckel 360 verbunden, wobei die Feder 440 auf den Kolben 430 in der in Fig. 2 gewählten Darstellung nach unten gerichtete Kraft ausübt. Anders ausgedrückt, vermittelt die Feder 440 über den Deckel 360 und den Kolben 430 einen häufig geringen Druck auf das in dem Schmiermittelbehälter enthaltene Fett. Hierdurch kann gegebenenfalls auch ein Betrieb der Mehrkolbenpumpe 200 in einer anderen, als der in Fig. 2 gezeigten Orientierung, also beispielsweise in einer "auf dem Kopf stehenden" Position ermöglicht werden.

Der Kolben 430 weist an einer dem Schmiermittel bzw. dem Fett zugewandten Oberfläche einen Zufluss 450 auf, der über einen Anschluss 460 mit einem Befüllschlauch 470 verbunden ist. Der Befüllschlauch 470 ist über einen weiteren Anschluss 480 mit einem externen Anschluss 490 verbunden, über den, beispielsweise durch eine Befüllpumpe, Schmiermittel in den Schmiermittelbehälter 390 über den Befüllschlauch 470 und den Zufluss 450 gepumpt werden kann. So kann beispielsweise im Rahmen einer Inbetriebnahme, einer Wartung oder aber auch einer Reparatur gegebenenfalls Schmiermittel in den Schmiermittelbehälter 390 gepumpt werden.

Der Kolben 430 ist hierbei über zwei Dichtelemente 500-1 und 500-2 gegenüber dem Zylinder 300 gegen ein Austreten des Schmiermittels bzw. des Fetts in den Bereich des Befüllschlauchs 470 abgedichtet.

Die Bodenplatte 370 weist ferner eine zentral bzw. mittig gelegene Austrittsöffnung 510 auf, die einen Austritt des Schmiermittels, also des Fetts in ein Pumpenelement 260 ermöglicht, bei dem es sich genauer gesagt um ein Kolbenpumpelement 270 handelt. Wie der Name "Mehrkolbenpumpe" bereits andeutet, weist die Mehrkolbenpumpe 200 typischerweise mehr als ein Pumpelement 260 auf, wobei in Fig. 2 aufgrund der dort gewählten Darstellung jedoch nur ein einziges Pumpelement 260 sichtbar ist.

Das Pumpelement 260 weist ein Gehäuse 520 auf, welches bei dem in Fig. 2 dargestellten Pumpelement 260 zweiteilig ausgeführt ist und mit einem zwischen den beiden Teilen des Gehäuses 520 angeordneten Dichtring gegeneinander abgedichtet ist. Das Gehäuse 520 weist eine Zuflussöffnung 530 auf, die mit der Austrittsöffnung 510 in der Bodenplatte 370 fluidtechnisch verbunden ist. Durch diese kann Schmiermittel, also beispielsweise Fett, in eine Pumpenkammer 540 in einem Inneren des Gehäuses 520 eindringen und über einen in der Pumpenkammer beweglich angeordneten Pumpenkolben 550 zu einem Ausgang 560 für den Schmierstoff bzw. das Schmiermittel des Pumpelements 260 gedrückt werden. Mit dem Ausgang 560 ist ein Rückschlagventil 570 gekoppelt, welches ein Rückfließen des bereits geförderten Schmiermittels in die Pumpenkammer 540 unterbindet.

An einer der Pumpenkammer 540 abgewandten Seite weist das Gehäuse 520 des Pumpelements 260 zwei entlang der in Fig. 2 gezeigten Blickrichtung hintereinander liegende Steueranschlüsse 580 auf, die auch als P1 und P2 bezeichnet werden. Die Steueranschlüsse 580 bieten so einen Zugang zu einem Steuerraum 590, der entlang dem Pumpenkolben 550 betrachtet an einer der Pumpenkammer 540 entgegengesetzten Seite des Gehäuses 520 angeordnet ist. Der Steuerraum 590 wird ebenso wie die Pumpenkammer 540 durch den Pumpenkolben 550 verschlossen. Hierdurch kann durch Einleiten eines Steuermediums, insbesondere durch Einleiten des Schmiermittels von der ersten Schmiermittelpumpe 110 eine Kraft auf den Pumpenkolben 550 derart ausgeübt werden, dass dieser sich bei der in Fig. 2 gezeigten Darstellung nach links bewegt, und so die Zuflussöffnung 530 verschließt und in der Pumpenkammer 540 befindliches Schmiermittel durch den Ausgang 560 und das Rückschlagventil 570 fördert.

Um eine Rückkehr des Pumpenkolbens 550 in die in Fig. 2 gezeigte Ruhestellung bei einem Abbau des Drucks an den Steueranschlüssen 580 zu ermöglichen, ist in dem Inneren des Gehäuses 520 ferner eine Druckfeder 600 angeordnet, die eine in Fig. 2 nach rechts gerichtete Kraft auf ein tellerförmiges Bauteil 610 ausübt, welches mit dem Pumpenkolben 550 mechanisch verbunden ist. Die Druckfeder 600 stützt sich hierbei an einem Teil des Gehäuses 520 auf, das der Pumpenkammer 540 zugewandt ist und - bei der hier gezeigten Mehrkolbenpumpe 200 - auch die Zuflussöffnung 530 und den Ausgang 560 umfasst.

Aufgrund der Tatsache, dass das Pumpenelement 260 zwei Steueranschlüsse 580 aufweist, die mit dem gleichen Steuerraum 590 fluidtechnisch gekoppelt sind, also in diesen münden, kann so ein von der ersten Schmiermittelpumpe 110 gefördertes Schmiermittel durch einen der beiden Steueranschlüsse 530 in den Steuerraum 590 eindringen und wenigstens teilweise das Pumpenelement 260 durch den zweiten Steueranschluss 580 wieder verlassen. Werden, wie dies in Fig. 1 gezeigt ist, mehrere entsprechende Mehrkolbenpumpen 200 mit ihren Steueranschlüssen 580 "in Serie" geschaltet, sind die entsprechenden Pumpenkolben 550 parallel geschaltet. Wird eine Ausbreitungsgeschwindigkeit des Drucks in dem Schmiermittel und andere retardierende Effekt vernachlässigt, wird so bei einem Beaufschlagen eines der Steueranschlüsse 580 mit einem Druck der Pumpenkolben aller angeschlossener Mehrkolbenpumpen 200 im Wesentlichen zeitgleich, also quasi zeitgleich bewegt. Anders ausgedrückt sind die Ausgänge 560 der betreffenden Pumpenelemente der entsprechenden Mehrkolbenpumpen 200 parallel geschaltet.

Wie bereits zuvor erwähnt wurde, weisen die in Fig. 2 dargestellten Mehrkolbenpumpen 200 typischerweise mehr als ein Pumpelement 260 auf. Entsprechend weisen diese auch eine entsprechende Anzahl von Ausgängen 560 und Pumpenkolben 550 auf. Häufig werden, um beispielsweise eine kompakte Bauform einer entsprechenden Mehrkolbenpumpe 200 zu ermöglichen, nicht mehr als drei entsprechende Pumpenelemente 260 integriert. Selbstverständlich können bei anderen Ausführungsbeispielen jedoch auch mehr oder weniger Pumpenelemente integriert werden. Grundsätzlich ist es auch möglich, eine Einkolbenpumpe auf Basis der Mehrkolbenpump 200, wie sie in Fig. 2 dargestellt ist, zu implementieren.

Fig. 2 zeigt so eine hydraulisch angetriebene Mehrkolbenpumpe 200, die, wie Fig. 1 bereits gezeigt hat, beispielsweise im Rahmen eines Schmiermittelsystems 100 gemäß einem Ausführungsbeispiel eingesetzt werden kann. Bei Verwendung einer solchen Mehrkolbenpumpe 200 im Rahmen einer Einleitungsschmieranlage können so mit nur einer Versorgungspumpe, nämlich der ersten Schmiermittelpumpe 110, einem Schmierstoffverteiler 150 und weitere Mehrkolbenpumpen, nämlich die zweite Schmierstoffpumpe 190 und gegebenenfalls die dritte Schmierstoffpumpe 240, angetrieben werden.

Anders ausgedrückt wird die Mehrkolbenpumpe 200, wie sie in Fig. 2 dargestellt ist, durch ein Pumpenaggregat, nämlich die erste Schmierstoffpumpe 110, mit einer Druckentlastung betätigt. Der Anschluss einer entsprechenden Hauptschmierleitung erfolgt an einem der beiden Steueranschlüsse 580. Bei einem Druckanstieg schieben die Pumpenkolben 550 den bereits angesaugten Schmierstoff über das an dem Ausgang 560 angebaute Rückschlagventil 570 zu dem Verbraucher, also der Schmierstelle bzw. Verbrauchsstelle 120, 290, 300, wie sie in Fig. 1 gezeigt ist. Haben alle Kolbenverteiler 160 und Mehrkolbenpumpen 200 gefördert, steigt der Betriebsdruck in der entsprechenden Hauptleitung bis zu einem fest eingestellten oder programmierbaren Wert an, dessen Erreichen durch einen in Fig. 1 nicht gezeigten Druckschalter oder einen anderen Drucksensor detektiert werden kann. Dieser gibt dann ein Signal an die Steuerung der ersten Schmiermittelpumpe 110 ab. Ein ebenfalls in Fig. 1 nicht gezeigtes Entlastungsventil schaltet und der Druck in der Hauptleitung fällt wieder ab. Die Pumpenkolben 550 der Pumpenelemente 260 werden durch die eingebauten Druckfedern 600 in ihre Ausgangslage geschoben, wie sie beispielsweise in Fig. 2 gezeigt ist. Beim Überfahren der Ansaugbohrung, also beim Überfahren der Zuflussöffnung 530, saugen diese den neuen Schmierstoff in die Ansaugkammer bzw. Pumpenkammer 540 für die nächste Förderung. Das Rückschlagventil 570 unterbindet bzw. verhindert hierbei das Zurücksaugen aus dem Pumpenausgang.

Durch die Verwendung der zusätzlichen hydraulisch angetriebenen Mehrkolbenpumpen in einer Zentraleinleitungsschmieranlage, wie sie Fig. 1 auch zeigt, wird im Allgemeinen nur ein Pumpenaggregat, nämlich die erste Schmiermittelpumpe 110 mit einem entsprechenden Entlastungsventil und einer Steuerung benötigt. Weiterhin können mit den Mehrkolbenpumpen 200 in einem Schmiersystem 100 weitere Fette verwendet und verteilt werden. Es kann auch ein gemischtes Schmiersystem realisiert werden, wie dies bereits in Fig. 1 gezeigt wurde. Mit Kolbenverteilern 160 in der Hauptleitung kann so ein Einleitungsschmierungssystem realisiert werden, während mit Verteilern 150, die als Progressivverteiler 280 implementiert sind, nach der Mehrkolbenpumpe 200 ein entsprechendes Progressivsystem umgesetzt werden kann.

So hat Fig. 1 gerade eine Fettschmieranlage, also ein Schmiermittelsystem 100 gezeigt, welches zwei verschiedene Schmiersysteme vereint. Es basiert einerseits auf einem Einleitungsschmierungssystem mit der ersten Schmiermittelpumpe 110 und einem Progressivsystem, mit der zweiten und der dritten Schmiermittelpumpe 190, 240, welches in der Lage ist, insgesamt bis zu drei verschiedene Schmierstoffe oder Schmiermittel an entsprechende Verbrauchsstellen zu fördern.

Fig. 3 zeigt eine schematisch vereinfachte Querschnittsdarstellung einer Windkraftanlage 700 gemäß einem Ausführungsbeispiel. Die Windkraftanlage 700 umfasst eine Gondel 710, die über ein Azimutlager 720 mit einem nicht in Fig. 3 gezeigten Turm drehbar gekoppelt ist. Die Windkraftanlage 700 umfasst ferner einen Azimutantrieb 730, der mit der Gondel 710, dem Azimutlager 720 und/oder dem nicht in Fig. 3 gezeigten Turm derart gekoppelt ist, dass die Gondel 710 um das Azimutlager 720 und eine durch dieses Lager definierte Drehachse rotiert werden kann. Hierdurch kann die Gondel 710 zu der herrschenden Windrichtung ausgerichtet werden. Der Azimutantrieb 730 kann beispielsweise als Elektromotor implementiert sein.

Die Windkraftanlage 700 weist ferner einen Rotor 740 auf, der mit einer Hauptwelle 750 der Windkraftanlage 700 drehfest gekoppelt ist. Die Hauptwelle 750 ist über ein Hauptwellenlager 760 drehbar zu der Gondel 710 geführt. Im Inneren der Gondel 710 ist die Hauptwelle 750 bei der in Fig. 3 gezeigten Windkraftanlage 700 mit einem Getriebe 770 eingangsseitig gekoppelt, welches ein oder mehrere Getriebelager umfasst. Eine Ausgangswelle 780 des Getriebes 770 ist mit einem Generator 790 gekoppelt, welcher bei dem in Fig. 3 gezeigten Ausführungsbeispiel wenigstens zwei Generatorlager 800-1 und 800-2 umfasst. Der Generator 790 ist hierbei derart ausgebildet, um eine Rotationsbewegung der Ausgangswelle 780 des Getriebes 770 in eine elektrische Energie umzuwandeln.

Der Rotor 740 weist wenigstens ein Rotorblatt 810 auf. Genauer gesagt weist die in Fig. 3 gezeigte Windkraftanlage 700 insgesamt drei Rotorblätter 810 auf. Jedes der Rotorblätter 810 ist mit dem Rotor 740 über ein Blattlager 820 schwenkbar gekoppelt, das auch als Anstellwinkellager (engl. Pitch Angle Bearing) bezeichnet wird. Um die entsprechende Schwenkbewegung um das Blattlager 820 zu bewirken, weist der Rotor 740 ferner einen Rotorblattantrieb 830 auf, der auch als Blattlagerantrieb oder einfach als Antrieb bezeichnet wird. Hierbei verfügt bei dem in Fig. 3 gezeigten Ausführungsbeispiel jedes Rotorblatt 810 über jeweils ein Blattlager 820 und einen entsprechenden Rotorblattantrieb 830.

Eine Windkraftanlage 700 gemäß einem Ausführungsbeispiel umfasst ferner wenigstens ein Schmiermittelsystem 100 gemäß einem Ausführungsbeispiel. So weist die in Fig. 3 dargestellte Windkraftanlage 700 genauer gesagt zwei unabhängig voneinander operierende Schmiermittelanlagen 100-1 und 100-2 auf, wobei das Schmiermittelsystem 100-1 das des Rotors 740 ist, während das Schmiermittelsystem 100-2 der Gondel 710 angehört und in dieser angeordnet ist.

Bevor jedoch im Folgenden die beiden Schmiermittelsysteme 100-1 und 100-2 näher beschrieben und erläutert werden, sollte darauf hingewiesen werden, dass die bisher im Zusammenhang mit der Windkraftanlage 700 beschriebenen Komponenten weitgehend optional sind. So kann beispielsweise bei einer entsprechenden Ausgestaltung des Generators 790 der Einsatz des Getriebes 770 entfallen. Ebenso können in diesem Fall auch die in dem Getriebe 770 integrierten Getriebelager entfallen. Aber auch die Generatorlager 800-1 und 800-2 können gegebenenfalls anderweitig ausgestaltet werden.

Fig. 3 zeigt ein Schmierschema der Windkraftanlage 700. Das Schmiermittelsystem 100-1 des Rotors 740 umfasst so eine erste Schmiermittelpumpe 110-1, das, wie bereits im Zusammenhang mit Fig. 1 beschrieben wurde, als elektrisches Pumpenaggregat ausgeführt sein kann. Bei dem in Fig. 3 gezeigten Ausführungsbeispiel einer Windkraftanlage 700 ist an die erste Schmiermittelpumpe 110-1 eine Mehrzahl von Verteilern 150, genauer gesagt eine Mehrzahl von Kolbenverteilern 160 angeschlossen, die eine Schmierung der Blattlager 820 ermöglichen. So stellen die drei Blattlager 820 des Rotors 740 die jeweiligen ersten Verbrauchsstellen 120-1 des Schmiermittelsystems 100-1 dar.

Über die insgesamt drei Verteiler 150 bzw. Kolbenverteiler 160 ist ferner eine Mehrkolbenpumpe 200, wie Sie beispielsweise in Fig. 2 gezeigt ist, mit der ersten Schmiermittelpumpe 110-1 gekoppelt. Diese bildet die zweite Schmiermittelpumpe 190-1 des Schmiermittelsystems 100-1. Ausgangsseitig ist die Mehrkolbenpumpe, die wiederum hydraulisch, nämlich über die erste Schmiermittelpumpe 110-1 angesteuert wird, mit dem Rotorblattantrieb 830 gekoppelt. Dieser stellt somit die zweite Verbrauchsstelle 290-1 des Schmiermittelsystems 100-1 dar.

Durch den Einsatz des Schmiermittelsystems 100-1 können so die Blattlager 820 sowie der Rotorblattantrieb 830 mit unterschiedlichen Schmiermitteln, also beispielsweise unterschiedlichen Schmierfetten versorgt werden. Selbstverständlich können bei anderen Ausführungsbeispielen an die betreffende Implementierungsform der Windkraftanlage 700 angepasste Schmiermittelsysteme 100 gemäß einem Ausführungsbeispiel eingesetzt werden. So kann beispielsweise bei einer anderen Windkraftanlage die Anzahl der Rotorblätter 810 und damit die Anzahl der Blattlager 820 und der Rotorblattantriebe 830 variieren, also eine größere oder auch eine kleinere Anzahl von Rotorblättern 810 implementiert werden. Ebenso kann beispielsweise bei kleineren Windkraftanlagen 700 der Rotorblattantrieb 830, der bei größeren Windkraftanlagen typischerweise elektrisch ausgestaltet ist, durch eine mechanische Lösung oder eine hydraulische Lösung ersetzt werden. Eine solche kann gegebenenfalls ohne eine solche Schmierung auskommen.

Das Schmiersystem 100-2 der Gondel 710 umfasst ebenfalls eine erste Schmiermittelpumpe 110-2, wie sie im Zusammenhang mit Fig. 1 bereits beschrieben wurde. Diese kann wiederum als elektrisches Pumpenaggregat implementiert sein. Sie ist über eine Mehrkolbenpumpe 200, wie sie ebenfalls bereits im Zusammenhang mit Fig. 1 und 2 beschrieben wurde und die als zweite Schmiermittelpumpe 190-2 des Schmiermittelsystems 100-2 dient, mit mehreren, genauer gesagt drei Verteilern 150, die ebenfalls wiederum als Kolbenverteiler 160 implementiert sind fluidtechnisch gekoppelt. Darüber hinaus ist die erste Schmiermittelpumpe 110-2 ebenfalls mit einer dritten Schmiermittelpumpe 240-2 gekoppelt, die ebenfalls als Mehrkolbenpumpe 200 implementiert ist.

Die zweite Schmiermittelumpe 190-2 ist hierbei über entsprechende zweite Schmiermittelpfade mit dem Hauptlager 750 fluidtechnisch gekoppelt, sodass das Hauptlager 750 den oder die zweiten Verbrauchsstellen 290-2 bilden. Die dritte Schmiermittelpumpe 240-2 ist ausgangsseitig mit dem Azimutantrieb 730 gekoppelt, sodass dieser bei dem in Fig. 3 gezeigten Schmierschema den oder die dritten Verbrauchsstellen 300-2 des Schmiermittelsystems 100-2 bildet. Über die insgesamt drei Kolbenverteiler 160 sind das Azimutlager 720 sowie die beiden Generatorlager 800-1 und 800-2 mit dem Ausgang der ersten Schmiermittelpumpe 110-2 des Schmiermittelsystems 100-2 gekoppelt. Folglich bilden diese die jeweils ersten Verbrauchsstellen 120-2 dieses Schmiermittelsystems.

Selbstverständlich können bei anderen Ausführungsbeispielen einer Windkraftanlage 700 nicht nur die Komponenten der Gondel 710 anderweitig ausgeführt sein, sondern auch das Schmiermittelsystem 100-2 kann entsprechend den dort herrschenden Bedingungen angepasst werden. Gegebenenfalls kann es auch möglich sein, bei einer Windkraftanlage 700 nur ein einziges Schmiermittelsystem 100 gemäß einem Ausführungsbeispiel einzusetzen. Bei diesem kann die erste Schmiermittelpumpe 110 beispielsweise in der Gondel 710 angeordnet sein.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

## Patentansprüche

1. Schmiermittelsystem (100) mit folgenden Merkmalen:
einer ersten Schmiermittelpumpe (110), die über einen ersten Schmiermittelpfad (130) mit einer ersten Verbrauchsstelle (120) gekoppelt ist; und
einer zweiten Schmiermittelpumpe (190), die über einen zweiten Schmiermittelpfad (310) mit einer zweiten Verbrauchsstelle (290) gekoppelt ist, wobei die zweite Verbrauchsstelle (290) von der ersten Verbrauchsstelle (120) verschieden ist;
wobei der erste (130) und der zweite Schmiermittelpfad (310) voneinander getrennt sind; und
wobei die zweite Schmiermittelpumpe (190) von der ersten Schmiermittelpumpe (110) durch eine von dieser geförderten Schmiermittelmenge angesteuert wird.

2. Schmiermittelsystem (100) nach Anspruch 1, bei der die erste Schmiermittelpumpe (110) eine elektrisch angesteuerte Schmiermittelpumpe umfasst.

3. Schmiermittelsystem (100) nach einem der vorhergehenden Ansprüche, bei dem die erste (110) und/oder die zweite Schmiermittelpumpe (190) einen Schmiermittelbehälter und/oder ein Schmiermittelreservoir (330) umfasst.

4. Schmiermittelsystem (100) nach einem der vorhergehenden Ansprüche, bei dem die erste Schmiermittelpumpe (110) und die zweite Schmiermittelpumpe (190) für unterschiedliche Schmiermittel ausgebildet sind.

5. Schmiermittelsystem (100) nach einem der vorhergehenden Ansprüche, bei dem die erste (110) und die zweite Schmiermittelpumpe (190) derart ausgebildet sind, dass ein Verhältnis einer von der ersten (110) und der zweiten Schmiermittelpumpe (190) geförderten Schmiermittelmenge oder ein Verhältnis eines von der ersten (110) und der zweiten Schmiermittelpumpe (190) bereitgestellten Drucks des von diesen jeweils geförderten Schmiermittels wenigstens 2:1 oder höchstens 1:2 beträgt.

6. Schmiermittelsystem (100) nach einem der vorhergehenden Ansprüche, bei dem die zweite Schmiermittelpumpe (190) eine Mehrzahl von Pumpenelementen (260) umfasst, und das eine Mehrzahl zweiter Verbrauchsstellen (290) und eine Mehrzahl zweiter Schmiermittelpfade (310) umfasst, wobei jedes Pumpenelement (260) über einen zweiten Schmiermittelpfad (310) der Mehrzahl zweiter Schmiermittelpfade mit einer zweiten Verbrauchsstelle (290) der Mehrzahl zweiter Verbrauchsstellen gekoppelt ist.

7. Schmiermittelsystem (100) nach einem der vorhergehenden Ansprüche, das ferner eine dritte Schmiermittelpumpe (240), die mit einem dritten Schmiermittelpfad (320) zu einer dritten Verbrauchsstelle (300) gekoppelt ist, wobei die dritte Verbrauchsstelle (300) von der ersten (120) und der zweiten Verbrauchsstelle (290) verschieden ist, wobei der erste (130), der zweite (310) und der dritte Schmiermittelpfad (320) voneinander getrennt sind, und wobei die dritte Schmiermittelpumpe (240) von der ersten Schmiermittelpumpe (110) angesteuert wird.

8. Schmiermittelsystem (100) nach einem der vorhergehenden Ansprüche, das ferner einen Verteiler (150) in dem ersten Schmiermittelpfad (130) umfasst, der zwischen der ersten Schmiermittelpumpe (110) und der zweiten Schmiermittelpumpe (190) oder hinter der zweiten Schmiermittelpumpe (190) fluidtechnisch angeordnet ist, und über den die erste Verbrauchsstelle (120) mit der ersten Schmiermittelpumpe (110) gekoppelt ist.

9. Windkraftanlage (700), die ein Schmiermittelsystem (100) nach einem der vorhergehenden Ansprüche umfasst.

10. Windkraftanlage (700) nach Anspruch 9, bei der die erste (120) und die zweite Verbrauchsstelle (290) eine Komponente der Windkraftanlage (700) der Gruppe von Komponenten umfasst, wobei die Gruppe von Komponenten ein Rotorblattlager (820), ein Anstellwinkellager (820), ein Azimutlager (720), ein Hauptwellenlager (760), ein Generatorlager (800), ein Getriebelager, ein Getriebe (770), einen Rotorblattantrieb (830) und ein Azimutantrieb (730) umfasst.
